# EUROPEAN PATENT SPECIFICATION

(11) **EP 0 342 908 B1**
(45) Date of publication and mention of the grant of the patent: **23.06.1993**
(21) Application number: 89304904.9
(22) Date of filing: 16.05.1989
(51) Int. Cl.: B60C 11/01

(54) **Pneumatic tyre**
Luftreifen
Bandage pneumatique

(30) Priority: 19.05.1988 JP 123428/88
(43) Date of publication of application: 23.11.1989
(73) Proprietor: SUMITOMO RUBBER INDUSTRIES LIMITED, Chuo-ku Kobe-shi Hyogo 651 (JP)
(72) Inventor: Ochiai, Kiyoshi, Kobe-shi Hyogo-ken (JP)
(74) Representative: Stewart, Charles Geoffrey

(56) References cited:
- AT-B- 344 524
- FR-A- 2 152 907
- US-A- 2 575 439
- PATENT ABSTRACTS OF JAPAN, vol. 10, no. 163 (M-487)[2219], 11th June 1986; & JP-A-61 16 112 (SUMITOMO GOMU KOGYO K.K.) 24-01-1986
- PATENT ABSTRACTS OF JAPAN, vol. 10, no. 100 (M-470)[2157], 16th April 1986; & JP-A-60 236 807 (SUMITOMO GOMU KOGYO K.K.) 25-11-1985

## Description

The present invention relates to a pneumatic tyre having less heel and toe wear around lateral tread grooves.

Various types of tread patterns have been used for a pneumatic tyre, for examples a rib type pattern consisting of main grooves extending circumferentially of the tyre in a straight or zigzag configuration, a rib-lug type pattern consisting of main grooves and axially extending lateral grooves formed in the shoulder regions of the tyre, a tread pattern called all-season type or snow type consisting of main grooves and lateral grooves crossing the main grooves, a lug type pattern consisting of wide lateral grooves extending to the equator of the tyre from each tread edge, a block type pattern consisting of wide main grooves and wide lateral grooves intersecting the wide main grooves, and the like.

In the tyre provided with lateral grooves such as the above-mentioned rib lug type or all season type patterns, the traction, wet grip and similar properties are improved by the lateral grooves. Such lateral grooves, however, shorten the wear life of the tyre.

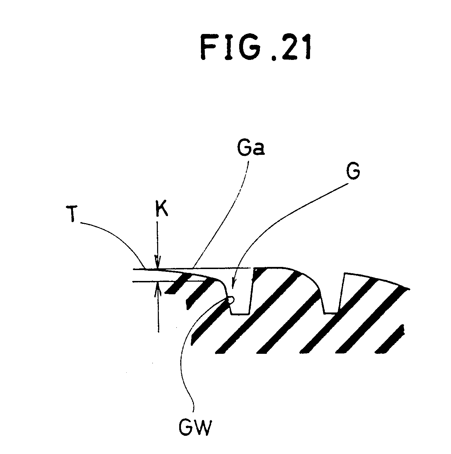

As shown in Figure 21, the tread face T wears particularly near to the radially outward portions of the groove sidewall GW of the lateral groove G, also the wear K of the portion on the kick-out side Ga (the toe side) is faster and greater than that on the step-in side (the heel side). The result of both is that the wear of the portion on the step-in side grows to give a so-called heel and toe wear, whereby the wear life of the tyre tread is shortened.

In order to prevent such abnormal wear it has been proposed to increase the hardness of the rubber of the sidewalls of the lateral grooves, to somewhat decrease the groove depth of the lateral grooves, to increase the inclination angle of the sidewalls of the lateral grooves, to decrease the groove width and the like. These were intended to improve the resistance to wear or to lessen the amount of slip of the tread against the road face by lessening the movement of the groove sidewalls GW. However, to use harder rubber for the sidewalls of the lateral groove complicates the production of the tyre and increases the hardness of part of the tread face, which sometimes degrades other tyre performance factors such as traction. Decreased depth of the lateral grooves is apt to decrease the traction, on-the-snow performance and wet grip. Increasing the inclination angle of the groove sidewall and decreasing the groove width do not provide any real improvement in uneven wear.

Patent Publication FR-A-2152907 which corresponds to the preamble of claim 1, discloses a tyre tread having circumferential shoulder ribs provided with a plurality of axially extending grooves which at the tread surface have the form of narrow slots but which at their radially inner base have the form of wide drainage channels. On entering the road contacting area the narrow slot part of the groove closes restricting further movement of the groove sidewalls and thus preventing complete closure of the radially inner drainage channel.

Patent Publication Patent Abstracts of Japan, Vol. 10, No 163 (M-487)[2219], 11 June 1986 : corresponding to JP-A-61-16112 discloses a sipe in a tyre tread wherein the sipe is prevented from closing in spew rubber elements thus improving the ability of the tread rubber to move under driving and braking conditions.

It is therefore an object of the present invention to provide a pneumatic tyre in which uneven wear of the tread is prevented to prolong the tyre life.

According to the present invention, a pneumatic tyre having lateral tread grooves extending parallel or at a slant to the axial direction of the tyre, the lateral grooves being provided with a bridge between the opposed groove sidewalls, the bridge being above and apart from the groove base and connecting the said groove sidewalls to each other, is characterised in that the ratio t/d of the thickness t of the bridge in the radial direction of the tyre to the groove depth d of the lateral tread groove is not less than 0.1 and not more than 0.4, the radial height h of the bottom face of the bridge from the groove base is not less than said thickness t of the bridge, and the ratio lb/lg of the length lb of the bridge at the bottom face thereof in the longitudinal direction of the lateral tread groove to the length lg of the lateral groove in the longitudinal direction is not less than 0.05 and not more than 0.35.

As a result the movement of the groove sidewalls into the lateral groove G and the deformation in the tread adjacent the grooves when contacting the ground and leaving the ground effectively prevents uneven wear such as heel and toe wear without deteriorating braking performance, traction, road grip and the like. As the tyre tread wears the lateral grooves become shallow, and the bridge wears away, because the bridge is formed above the groove base. Accordingly, the tyre performance is maintained even in the last stages of tyre life.

Embodiments of the present invention will now be described in detail with reference to the accompanying drawings, in which:
Figure 1 is a perspective view showing an embodiment of the present invention;
Figure 2 is a plan view thereof;
Figure 3 is a sectional view taken along the line I-I of Figure 2;
Figure 4 is a sectional view taken along the line II-II of Figure 2;
Figure 5 is a perspective view showing another embodiment of the present invention;
Figure 6 is a plan view thereof;
Figure 7 is a sectional view thereof;
Figure 8 is a graph showing the relationship between t/d ratio and heel and toe wear;
Figure 9 is a graph showing the relationship between lb/lg ratio and heel and toe wear;
Figure 10 is a graph showing the relationship between t/d ratio and braking performance;
Figure 11 is a plan view showing another embodiment of the present invention;
Figures 12 and 13 are sectional views thereof;
Figure 14 is a plan view showing a further embodiment of the present invention;
Figure 15 is a sectional view thereof;
Figure 16 is a plan view showing another embodiment of the present invention;
Figures 17 and 18 are sectional views thereof;
Figure 19 is a plan view showing another embodiment of the present invention;
Figure 20 is a sectional view thereof; and
Figure 21 is a sectional view showing heel and toe wear.

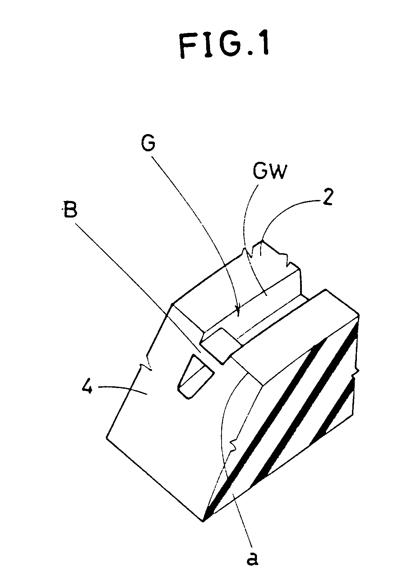

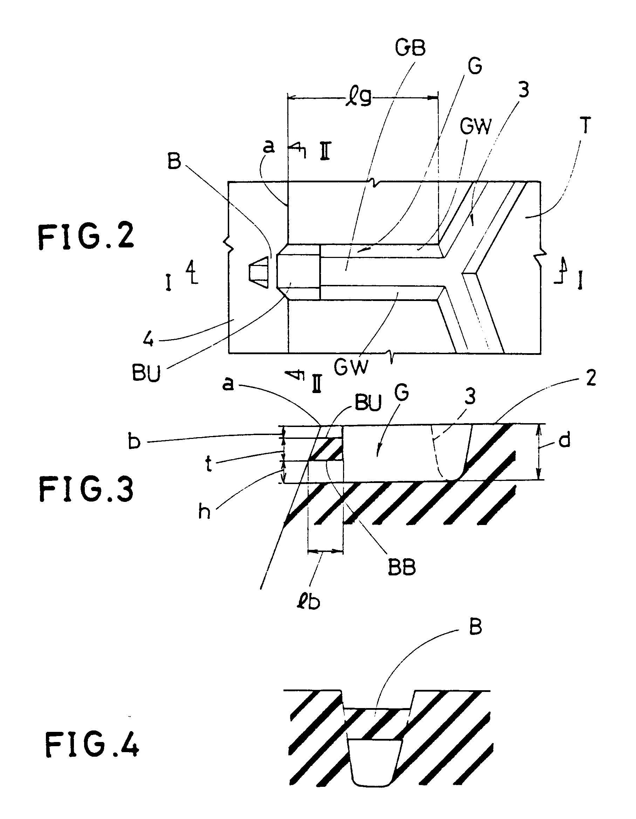

In Figures 1 to 4, the tyre of the present invention is a heavy duty tyre for trucks and buses. The tread portion 2 is provided with circumferentially extending main grooves 3 and axially extending lateral grooves G to form an all season type tread pattern.

The main grooves 3 extend in a zigzag shape in the circumferential direction of the tyre.

The lateral grooves G extend from the angled portions of the zigzag main grooves 3 into the shoulder region 4 at a right angle to the circumferential direction of the tyre, and in this example, the axially outer end of the lateral groove G is open at the shoulder region, that is, the side face of the tyre.

The lateral groove is provided with a bridge B formed between the opposed sidewalls GW of the lateral groove G and above the groove base GB. Thus the bridge B is above the groove base GB and near the tread edge (a) between the tread region 2 and the shoulder regions 4 in the axial direction of the tyre.

Because the opposed groove sidewalls GW are connected with each other by the bridge B the stiffness of the groove sidewalls in the regions of the bridge B is increased and the amount of movement thereof is decreased. Therefore, slip against the ground is lessened on both sides of the lateral groove, the uneven wear of the tread is prevented. By forming the bridge near the tread edge (a), the movement of the sidewalls into the groove is effectively prevented at those points of the tyre.

Further, the top of the above-mentioned bridge B is located beneath the tread face T so that a certain distance b is provided between the top face B/U of the bridge and the unworn or new tyre tread face T in the radial direction of the tyre, whereby good road grip is provided in the early stages of tyre life.

The ratio b/d of the above-mentioned distance b to the groove depth d of the lateral groove from the tread face T to the groove base GB is in the range of 0 to 0.2.

Further, the ratio t/d of the thickness t of the bridge B in the radial direction to the groove depth d is not less than 0.1 and not more than 0.4.

Furthermore, the radial distance h of the bottom face BB of the bridge from the groove base GB is not less than the thickness t of the bridge (t < h).

Still furthermore, the ratio lb/lg of the length lb of the bridge at the bottom face BB in the longitudinal direction of the lateral groove G to the length lg of the same lateral groove G in the longitudinal direction is not less than 0.05 and not more than 0.35.

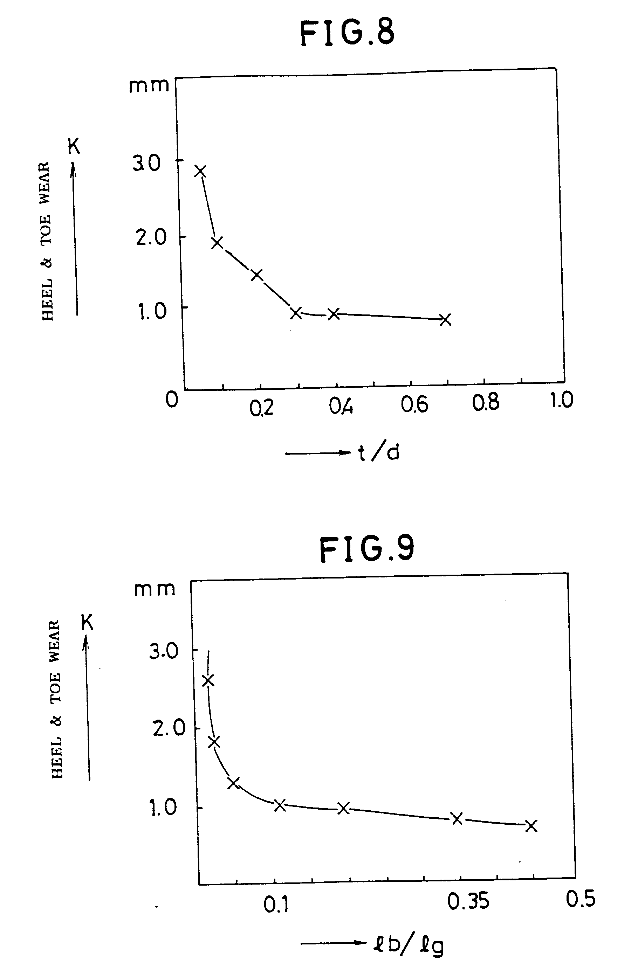

A field test was conducted to establish the effect of the invention. 10.00R20 test tyres mounted on 7.00T rims were installed on the front axle of a 2-2D wheel type pump truck and inflated to 8.0 kgf/sq.cm, and then the heel and toe wear was measured after 20,000 km running. The test reults are shown graphically in Figures 8 and 9.

In Figure 8, the ratio t/d of the thickness t of the bridge to the groove depth d is shown as the axis of abscissa and the heel and toe wear K measured as in Figure 21) is shown as the axis of ordinate. In the tyres used in this test, the radial distance h of the bottom face of the bridge from the groove base was 10.0mm, the length lb of the bottom face in the longitudinal direction of the lateral groove was 8.0 mm, and the length lg of the lateral groove was 35 mm.

In general, when the heel and toe wear K is less than 2.0mm, then the tyre is considered to be really marketable.

In Figure 9, the ratio lb/lg of the length lb of the bottom face of the bridge to the length lg of the lateral groove G is shown as the axis of abscissa and the heel and toe wear is shown as the axis of ordinate, where the ratio t/d is 0.3 and the thickness t is 0.8 times the distance h of the bottom face of the bridge.

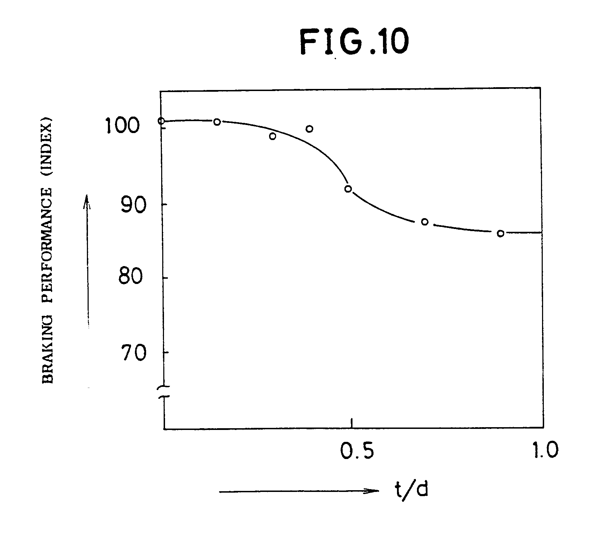

Figure 10 shows the results of braking distance tests on a wet asphalt-paved road, in which the braking distance from 80km/h to a stop was measured.

In Figure 10, the ratio t/d and the wet braking performance are shown along the axis of abscissa and the axis of ordinate, respectively, wherein the wet braking performance is indicated in terms of an index based on the assumption that the braking distance in a tyre have no bridge is 100.

As shown in Figure 8, in the tyres having the ratio t/d being not smaller than 0.1, the heel and toe wear K became under 2.0 mm, which shows that the bridge which connects the groove sidewalls was able to lessen the movement thereof when contacting the ground as well as when leaving the ground, and the amount of the slip of the lug (the tread element circumferentially divided by the lateral grooves) against the ground was reduced especially effectively when leaving the ground. As a result the mount of wear K was greatly reduced.

Moreover, as shown in Figure 10, when the ratio t/d was set to be more than 0.4, the wet braking performance was decreased. If the ratio t/d is more than 0.4, the bridge becomes too thick, and it impedes the drainage of the groove and excessively restricts the movement of the groove sidewalls, both of which lessen the road grip. Accordingly, the ratio t/d is preferably set to be not more than 0.4 and further not less than 0.1.

Further, if the radial height of h of the bottom BB of the bridge B from the groove base GB is less than t, the drainage of the lateral groove G is hindered, and the effect of the bridge B derived from connecting the groove sidewalls is diminished because the bridge B provides support to only the lower sidewalls of the groove.

Furthermore, if the ratio lb/lg of the length lb of the bottom face BB to the length lg of the lateral groove is less than 0.05, such a bridge cannot prevent the movement of the groove sidewalls and as a result, it becomes not possible to reduce the heel and toe wear K to be under 2.0mm. If the ratio is more than 0.35, it becomes too difficult to make the bridge using a vulcanizing mould. Accordingly, the ratio lb/lg is defined as being not less than 0.05 and not more than 0.35.

As previously mentioned, the heel and toe wear can be reduced by means of the bridge B which connects the opposed groove sidewalls, and at the same time, the braking performance is maintained by setting the ratio t/d in the above specified range.

The bridge B is gradually worn away during tyre use and finally disappears, and accordingly the lateral groove is then left fully opened which maintains the braking performance all through the tyre life.

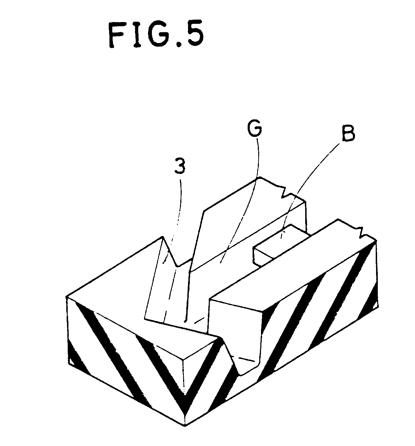

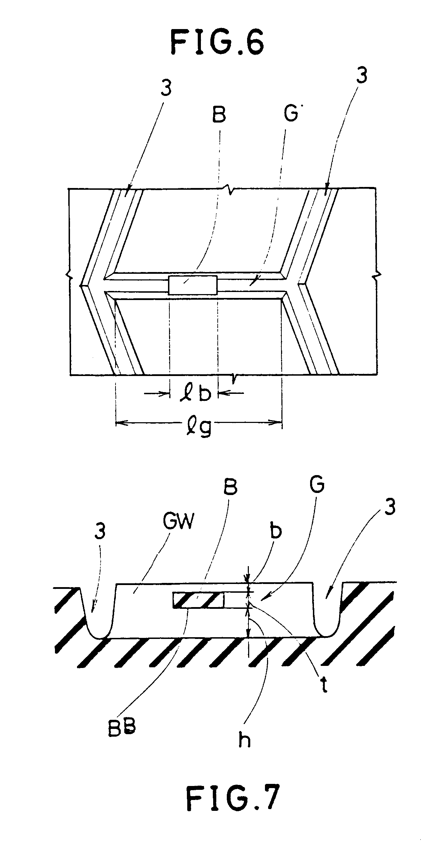

Figures 5 to 7 show another embodiment of the present invention, where the lateral groove G is formed in the tread crown region and extended between the adjacent two zig-zag main grooves 3, and the bridge B is formed in the centre of the lateral groove in the longitudinal direction of the groove.

In the case too, by setting the ratio t/d and the ratio lb/lg and the relation between the thickness t and the height h within the above-mentioned ranges in the same manner as the embodiment shown in Figures 1 to 4, the uneven wear in these parts of the tread too is diminished without deteriorating braking performance.

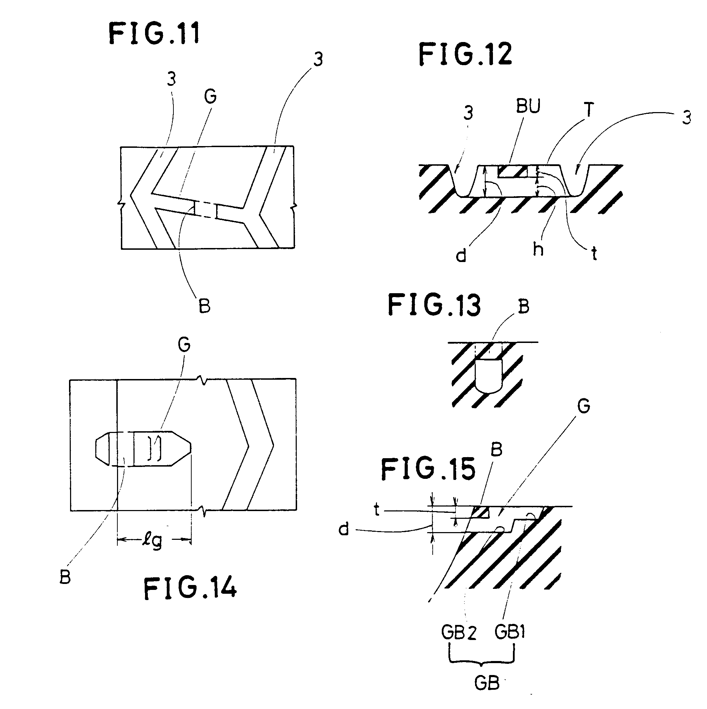

Further, in the present invention, as shown in Figures 11 to 13, the lateral groove G can be arranged obliquely, and the top face B/U can be the same height as the tread face T.

Figures 14 to 15 show another embodiment having a rib-lug type tread pattern, wherein the lateral groove G is provided at the groove base GB thereof with a deeper portion GB2 being deeper than the main portion GB1 so that the deeper portion is located beneath the bridge B.

In this case, the depth at the deeper portion GB2 is used as the above-mentioned groove depth d to define the ratio t/d, but the length lg of the lateral groove G is defined as the total length lb including the main portion and the deeper portion. Accordingly, it then becomes possible to increase the thickness t of the bridge.

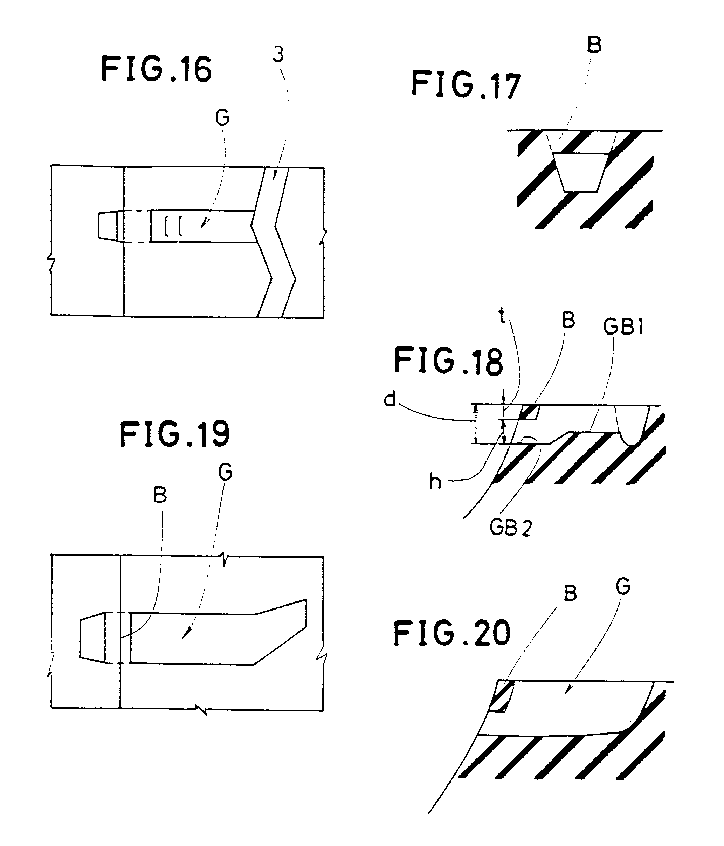

Figures 16 to 18 show an all season type tread pattern in which the lateral groove G is provided with the deeper portion GB2 beneath the bridge B similarly to the previous embodiment.

Figures 19 and 20 show a lug type tread pattern.

The present invention can be applied to various kinds of tread patterns for various kinds of tyres such as heavy duty tyres for trucks and buses, passenger car tyres and so on.

As described above, according to the present invention, the opposed sidewalls of the lateral groove are connected with each other by the bridge, therefore the bridge can control the movement of the groove sidewalls when the tread contacts the ground and when it leaves the ground. Accordingly, abnormal wear such as heel and toe wear is prevented without deteriorating wet grip performance.

Incidentally, such a bridge can be formed during or after the tyre vulcanising process.

In order to form the bridges in the tyre vulcanising process, it is necessary to arrange the bridges to be near the positions of the split faces of the vulcanising mould. Therefore, the number of split faces and the position thereof may be adjusted to form the bridges at a desired position in the axial direction. Further, it may be necessary to limit the inclining angle of the lateral groove so that the demoulding process is possible.

In order to form the bridge after the tyre vulcanising process, it is possible to drill or bore the lower part of the bridge. In this case, it is not necessary to limit the inclination angle of the lateral groove and therefore, the bridge can be formed in a lateral groove which is greatly inclined, for example, at 45 degrees.

## Claims

1. A pneumatic tyre having lateral tread grooves (G) extending parallel or at a slant to the axial direction of the tyre, the lateral grooves (G) being provided with a bridge (B) between the opposed groove sidewalls (GW), the bridge (B) being above and apart from the groove base (GB) and connecting the said groove sidewalls (GW) to each other, characterised in that the ratio t/d of the thickness t of the bridge (B) in the radial direction of the tyre to the groove depth d of the lateral tread groove (G) is not less than 0.1 and not more than 0.4, the radial height h of the bottom face (BB) of the bridge (B) from the groove base (GB) is not less than said thickness t of the bridge (B), and the ratio lb/lg of the length lb of the bridge (B) at the bottom face (BB) thereof in the longitudinal direction of the lateral tread groove (G) to the length lg of the lateral groove (G) in the longitudinal direction is not less than 0.05 and not more than 0.35.

2. A tyre according to claim 1 characterised in that the bridge (B) has a top surface (BU) which is beneath the tread surface (T) of the new tyre by a distance b where the ratio b/d between the distance b and the groove depth d is not more than 0.2.

3. A tyre according to claim 1 or 2 characterised in that the bridges (B) are adjacent the tread shoulders.

4. A tyre according to any of claims 1 to 3 characterised by said bridges (B) being arranged in said transverse grooves (G) axially inwards of outer circumferential grooves (3).

## Patentansprüche

1. Luftreifen mit seitlichen Laufflächenrillen (G), die sich parallel oder geneigt zu der Axialrichtung des Reifens erstrecken, wobei die seitlichen Rillen (G) mit einer Brücke (B) zwischen den einander gegenüberliegenden Seitenwänden (GW) der Rille versehen sind, die Brücke (B) oberhalb und getrennt von der Basis der Rille (GB) angeordnet ist und die Seitenwände (GW) der Rille miteinander verbindet,
dadurch **gekennzeichnet,**
daß das Verhältnis t/d der Dicke t der Brücke (B) in Radialrichtung des Reifens zu der Rillentiefe d der seitlichen Laufflächenrille (G) nicht weniger als 0.1 und nicht mehr als 0.4 beträgt, die radiale Höhe h der Unterseite (BB) der Brücke (B) ausgehend von der Rillenbasis (GB) nicht weniger als die Dicke t der Brücke (B) beträgt, und das Verhältnis lb/lg der Länge lb der Brücke (B) an der Unterseite (BB) der Brücke in Längsrichtung der seitlichen Laufflächenrille (G) zu der Länge lg der seitlichen Rille (G) in Längsrichtung nicht weniger als 0.05 und nicht mehr 0.35 beträgt.

2. Luftreifen nach Anspruch 1,
dadurch **gekennzeichnet,**
daß die Brücke (B) eine obere Oberfläche (BU) besitzt, die um einen Abstand b unterhalb der Laufflächenoberfläche (T) des neuen Reifens liegt, wobei das Verhältnis b/d zwischen dem Abstand b und der Rillentiefe d nicht mehr als 0.2 beträgt.

3. Luftreifen nach Anspruch 1 oder 2,
dadurch **gekennzeichnet,**
daß die Brücken (B) benachbart den Laufflächenschultern angeordnet sind.

4. Luftreifen nach einem der Ansprüche 1 bis 3,
dadurch **gekennzeichnet,**
daS die Brücken (B) in den Querrillen (G) axial innerhalb von äußeren Umfangsrillen (3) angeordnet sind.

## Revendications

1. Pneumatique ayant des gorges latérales (G) de la bande de roulement qui sont parallèles à la direction axiale du pneumatique ou inclinées par rapport à cette direction axiale, les gorges latérales (G) ayant un pontet (B) placé entre les parois latérales opposées (GW) des gorges, le pontet (B) étant placé au-dessus de la base (GB) de la gorge et à distance de celle-ci et raccordant les parois latérales (GW) de la gorge l'une à l'autre, caractérisé en ce que le rapport t/d de l'épaisseur t du pontet (B) dans la direction radiale du pneumatique à la profondeur d de la gorge latérale (G) de la bande de roulement n'est pas inférieur à 0,1 ni supérieur à 0,4, la hauteur radiale h de la face inférieure (BB) du pontet (B) par rapport à la base (GB) de la gorge n'est pas inférieure à l'épaisseur t du pontet (B), et le rapport lb/lg de la longueur lb du pontet (B) à la face inférieure (BB) de celui-ci dans la direction longitudinale de la gorge latérale (G) de la bande de roulement à la longueur lg de la gorge latérale (G) dans la direction longitudinale n'est pas inférieur à 0,05 ni supérieur à 0,35.

2. Pneumatique selon la revendication 1, caractérisé en ce que le pontet (B) a une surface supérieure (BU) qui est disposée au-dessous de la surface (T) de la bande de roulement du pneumatique neuf à une distance b telle que le rapport b/d de la distance b à la profondeur d de la gorge n'est pas supérieur à 0,2.

3. Pneumatique selon la revendication 1 ou 2, caractérisé en ce que les pontets (B) sont adjacents aux épaulements de la bande de roulement.

4. Pneumatique selon l'une quelconque des revendications 1 à 3, caractérisé en ce que les pontets (B) sont disposés dans les gorges transversales (G) axialement vers l'intérieur des gorges circonférentielles externes (3).
